(19) Europäisches Patentamt
European Patent Office
Office européen des brevets

(11) **EP 4 641 244 A1**

(12) **EUROPEAN PATENT APPLICATION**

(43) Date of publication:
**29.10.2025 Bulletin 2025/44**

(21) Application number: **24315203.0**

(22) Date of filing: **22.04.2024**

(51) International Patent Classification (IPC):
**G01S 3/04** *(2006.01)*     **G01S 3/24** *(2006.01)*
**G01S 3/34** *(2006.01)*

(52) Cooperative Patent Classification (CPC):
**G01S 3/043; G01S 3/24; G01S 3/34**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Rockwell Collins, Inc.
Cedar Rapids, IA 52498 (US)**

(72) Inventors:
• **RACAUD, Valérian Jean Charles Fabrice
Portet sur Garonne (FR)**
• **CAESTECKER, Emmanuel François
Seysses (FR)**

(74) Representative: **Dehns
10 Old Bailey
London EC4M 7NG (GB)**

(54) **DETERMINING A BEARING TO A RADIO BEACON**

(57)     An apparatus (1) for determining a bearing to a radio beacon (2) comprises an arrangement of radio antennas (3) comprising a non-directional antenna system ($\Sigma$) and one or more directional antenna systems. The non-directional antenna system ($\Sigma$) has a receiving pattern that is omni-directional in a first plane. Each directional antenna system has a respective receiving pattern that is directional in a respective direction in the first plane. The apparatus (1) receives, at the arrangement of radio antennas (3), a direct-sequence spread-spectrum radio signal, transmitted by a radio beacon (2). It generates, for each antenna system, a respective digital signal from an electrical signal output by the antenna system in response to the received radio signal. For each of the one or more directional antenna systems, it performs a coherent despreading operation by intercorrelating the digital signal from the directional antenna system with at least a portion of the digital signal from the non-directional antenna system to determine a correlation value for the directional antenna system. It processes the one or more determined correlation values to determine a bearing to the radio beacon (2) relative to the arrangement of radio antennas (3).

FIG. 1

EP 4 641 244 A1

## Description

TECHNICAL FIELD

The present disclosure relates to apparatus, methods and computer software for determining a bearing to a radio beacon.

BACKGROUND

COSPAS SARSAT (Cosmicheskaya Sistema Poiska Avariynyh Sudov Search and Rescue Satellite-Aided Tracking) is a satellite-based system for generating distress alerts and location data to assist in search and rescue (SAR) operations. Radio beacons carried by individuals or on-board vehicles can be activated in an emergency to transmit a radio beacon distress signal. The signal can be detected by satellites. Each beacon has a unique identifier which allows a ground station and mission control centre to initiate an appropriate search and rescue operation.

It can be helpful for rescuers to be able to determine a direction to the beacon as they approach the vicinity of the beacon. First generation COSPAS SARSAT signals include a continuous-wave portion that can be used as a homing signal to guide rescuers to the beacon, e.g. using handheld or vehicle-mounted equipment containing an amplitude-based multiple-antenna direction-finding system. Newer, second-generation COSPAS SARSAT beacon signals lack this homing signal portion and have a spread spectrum characteristic that makes them unsuitable for use by conventional amplitude-based direction finding systems. The newer signals rely instead on an accurate location being determined by the satellite system and then used by airborne or ground-based rescuers. However, a reliable satellite-determined location estimate may not always be available. An improved approach is desired.

SUMMARY OF THE INVENTION

From a first aspect, the present disclosure provides an apparatus for determining a bearing to a radio beacon, the apparatus comprising an arrangement of radio antennas comprising a non-directional antenna system and one or more directional antenna systems, wherein the non-directional antenna system has a receiving pattern that is omni-directional in a first plane, and wherein each directional antenna system has a respective receiving pattern that is directional in a respective direction in the first plane, wherein the apparatus is configured to:

    receive, at the arrangement of radio antennas, a direct-sequence spread-spectrum (DSSS) radio signal, transmitted by a radio beacon;
    generate, for each antenna system, a respective digital signal from an electrical signal output by the antenna system in response to the radio signal;
    for each of the one or more directional antenna systems, perform a coherent despreading operation by coherently intercorrelating the digital signal from the directional antenna system with at least a portion of the digital signal from the non-directional antenna system to determine a correlation value for the directional antenna system; and
    process the one or more determined correlation values to determine a bearing to the radio beacon relative to the arrangement of radio antennas.

From a second aspect, the present disclosure provides a method of determining a bearing to a radio beacon, the method comprising:

    receiving, at each antenna system of an arrangement of radio antennas, a direct-sequence spread-spectrum radio signal, transmitted by a radio beacon, wherein the arrangement of radio antennas comprises a non-directional antenna system and one or more directional antenna systems, the non-directional antenna system having a receiving pattern that is omni-directional in a first plane, and each directional antenna system having a respective receiving pattern that is directional in a respective direction in the first plane;
    generating, for each antenna system, a respective digital signal from an electrical signal output by the antenna system in response to the radio signal;
    for each of the directional antenna systems, performing a coherent despreading operation by coherently intercorrelating a digital directional signal from the directional antenna system with at least a portion of a digital non- directional signal from the non-directional antenna system to determine a correlation value for the directional antenna system; and

processing the one or more determined correlation values to determine a bearing to the radio beacon relative to the arrangement of radio antennas.

From a third aspect, the present disclosure provides computer software (and a transitory or non-transitory computer-readable medium carrying the same) for use in determining a bearing to a radio beacon, the computer software comprising instructions which, when executed on a processing system comprising one or more processors, cause the processing system to:

    receive a respective digital signal representative of at least a portion of a direct-sequence spread-spectrum radio signal, transmitted by a radio beacon and received at each antenna system of an arrangement of radio antennas, wherein the arrangement of radio antennas comprises a non-directional antenna system and one or more directional antenna systems, the non-directional antenna system having a receiving pattern that is omni-directional in a first plane, and each directional antenna system having a respective receiving pattern that is directional in a respective direction in the first plane;

for each of the directional antenna systems, perform a coherent despreading operation by coherently intercorrelating a digital directional signal from the directional antenna system with at least a portion of a digital non- directional signal from the non-directional antenna system to determine a correlation value for the directional antenna system; and

output the one or more determined correlation values for further processing to determine a bearing to the radio beacon relative to the arrangement of radio antennas.

Each directional antenna system may comprise two antenna elements (e.g. dipoles) spaced apart in the respective direction. These may be shared with another directional antenna system (e.g. with a system that is directed in the opposite direction). The apparatus may be configured to generate a digital signal from each directional antenna system as a difference signal from respective outputs of the two antenna elements. It may subtract (digitally or in analogue) an output from a first antenna element ($D_1$) of the directional antenna system from an output from a second antenna element ($D_2$) of the directional antenna system.

In some examples, a first antenna element ($D_1$) and a second antenna element ($D_2$) may be part of both a first directional antenna system and a second directional antenna system, e.g. directed in opposite directions. The apparatus may be configured to subtract an output from the first antenna element from an output from the second antenna element (e.g. $D_2$-$D_1$) in the first directional antenna system, and to subtract an output from the second antenna element from an output from the first antenna element(e.g. $D_1$-$D_2$) in the second directional antenna system.

The apparatus may comprise a plurality of directional antenna systems. It may comprise two directional antenna systems that are directional in non-parallel (e.g. orthogonal) directions. It may comprise at least four, six, eight or more directional antenna systems.

The respective directions of the directional antenna systems may be uniformly angularly distributed in the first plane. In use, the first plane may be an azimuthal plane. The antenna elements of the directional antenna systems may be arranged around a circle. The arrangement of radio antennas may be an Adcock antenna arrangement.

The non-directional antenna system may, in some examples, share an antenna element with one or more, or all, of the directional antenna systems. However, in other examples, the non-directional antenna system comprises an antenna element (e.g. a dipole) that is distinct from all antenna elements of the directional antenna systems. It may be at the centre of a circle formed by antenna elements of the directional antenna systems.

The apparatus may be further configured to process each digital signal to detect a spreading code in the digital signal and thereby determine timing information from the digital signal. It may use the timing information when performing the coherent despreading.

The apparatus may be further configured to perform carrier phase tracking for each digital signal. It may use the tracked carrier phase to perform a frequency correction for each digital signal ahead of the coherent despreading.

The apparatus may be further configured to generate one or more signal amplitude values from the one or more correlation values, and to apply Watson-Watt processing to the one or more generated signal amplitude values to determine a bearing to the radio beacon.

The apparatus may be further configured to provide a visual or audible indication to a user of the apparatus of the bearing to the radio beacon. It may be a direction finder.

The apparatus may be configured for mounting in a land, air or maritime vehicle for use in a search and rescue operation (e.g. a car, truck, helicopter, airplane, boat, ship, etc.). It may be configured for use in a fixed ground or maritime station.

The direct-sequence spread-spectrum radio signal may, in different examples, be a DSSS radio signal of any type, but in some examples it is a COSPAS SARSAT beacon signal. It may be a second-generation COSPAS SARSAT beacon signal. It may be in the 406 MHz band.

The coherent despreading operation may be performed for all of the directional antenna systems on a same temporal portion of the radio signal (e.g. simultaneous reception), or it may be performed on different temporal portions of the radio signal for different directional antenna systems (e.g. consecutive reception).

The apparatus may be further configured to decode data from the received radio signal.

Computer software as disclosed herein may further comprise instructions for processing each digital signal to detect a spreading code in the digital signal and thereby determine timing information from the digital signal, and for using the timing information when performing the coherent despreading.

Computer software as disclosed herein may further comprise instructions for performing carrier phase tracking for each digital signal, and using the tracked carrier phase to perform a frequency correction for each digital signal upstream of the coherent despreading.

Computer software as disclosed herein may further comprise instructions for processing the determined correlation values to determine a bearing to the radio beacon relative to the arrangement of radio antennas.

The apparatus may comprise a processing system comprising one or more processors, and a memory storing computer software as disclosed herein for execution by the processing system.

In some examples, the apparatus is further configured to:

receive, at the arrangement of radio antennas, a continuous-wave signal (e.g. a homing signal in a first-generation COSPAS SARSAT beacon signal);
for each of the directional antenna systems, determine a respective amplitude value from a respective digital signal from the directional antenna system; and
process the one or more determined amplitude values to determine a bearing to the radio beacon relative to the arrangement of radio antennas.

Such an apparatus may be configured to use a same process (e.g. the same hardware and/or software) for processing the correlation values for the spread-spectrum radio signal as for processing the amplitude values for the continuous-wave signal. Such an apparatus may have been upgraded from supporting first-generation COSPAS SARSAT beacon signal to also supporting second-generation COSPAS SARSAT beacon signals by loading computer software as disclosed herein to the apparatus. Thus, in some examples, no hardware changes need be required in order to implement the disclosed methods on apparatus that did not originally support them, assuming the apparatus has appropriate digital hardware and processing resources.

Features of any aspect or example described herein may, wherever appropriate, be applied to any other aspect or example described herein. Where reference is made to different examples or sets of examples, it should be understood that these are not necessarily distinct but may overlap.

BRIEF DESCRIPTION OF THE DRAWINGS

Certain examples of the present disclosure will now be described, by way of example only, with reference to the accompanying drawings, in which:

Fig. 1 is a schematic diagram of direction-finder apparatus according to an example of the present disclosure;
Fig. 2 is a set of graphs of power spectra of first-generation COSPAS SARSAT homing signals;
Fig. 3 is a set of graphs of power spectra of second-generation spread-spectrum COSPAS SARSAT homing signals;
Fig. 4 is a schematic diagram showing the apparatus of Fig. 1 in more detail; and
Fig. 5 is a plot of coherent power and antenna gain against time for different states of the apparatus.

DETAILED DESCRIPTION

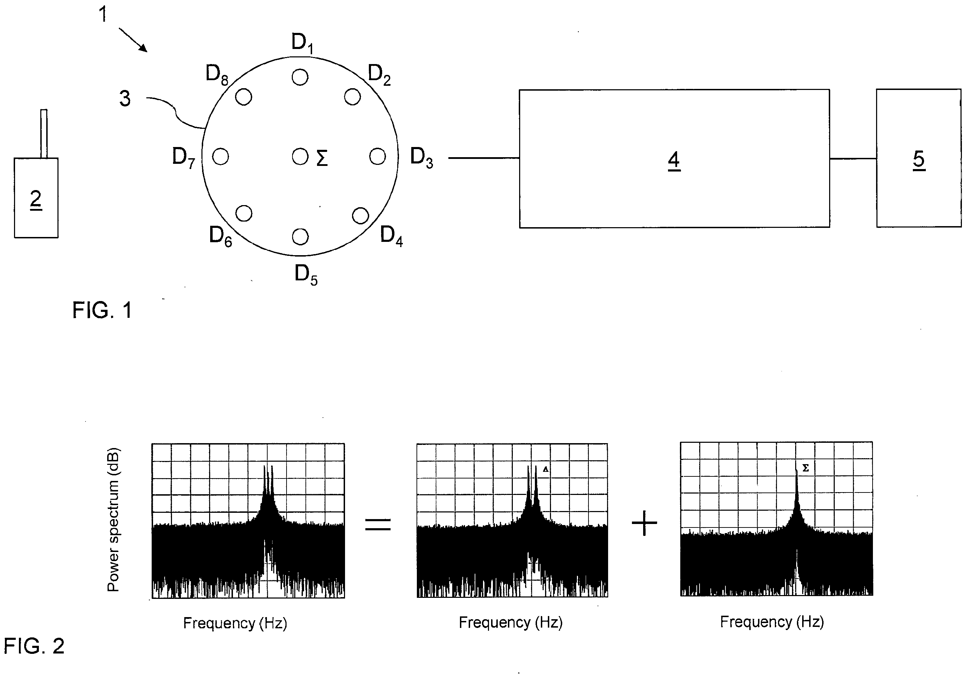

Fig. 1 shows a direction-finder apparatus 1 for use in rescue operations, to determine an angle of arrival (i.e. bearing) to a radio beacon 2 that is transmitting a DSSS signal. The signal could be any type of DSSS beacon, but in some examples it is a second-generation 406 MHz-band COSPAS SARSAT signal. The apparatus 1 may be handheld or carrier by a land, air or sea vehicle (e.g. an airplane or helicopter), or it could be in a fixed land or maritime station. As explained below, the apparatus 1 is able to determine a relative bearing to the radio beacon 2 despite the spread-spectrum nature of the received RF signal, by extracting the signal from RF noise floor with sufficient magnitude for being processing using a Watson-Watt direction-finding method.

The apparatus 1 has an Adcock-pseudo-Doppler-style antenna unit 3 having eight dipoles $D_1$ to $D_8$ arranged in a circle about a central non-directional dipole $\Sigma$, with all the dipoles lying in a plane. The non-directional dipole may be omni-directional at least in this plane. Radio-frequency (RF) signals received by the eight peripheral dipoles can be processed in diametrically-opposed pairs, $\{D_1,D_5\}$, $\{D_2,D_6\}$, $\{D_3,D_7\}$, $\{D_4,D_8\}$, $\{D_5,D_1\}$, $\{D_8,D_2\}$, $\{D_7,D_3\}$, $\{D_8,D_4\}$, with each ordered pair forming a different respective directional antenna system, to generate a corresponding difference signal for each of the eight directional antenna systems: $\Delta_1=D_1-D_5$, $\Delta_5=D_5-D_1$, $\Delta_2=D_2-D_6$, $\Delta_6=D_6-D_2$, $\Delta_3=D_3-D_7$, $\Delta_{17}=D_7-D_3$, $\Delta_4=D_4-D_8$, $\Delta_8=D_8-D_4$.

Although this example has eight directional dipoles, providing a total of eight ordered dipole pairs, and one omni-directional dipole, other examples may use different arrangements of antenna elements-e.g. an Adcock-style, or Doppler-shift-style, or interferometry-style antenna unit. Some examples may use monopoles instead of dipoles and/or have more or fewer directional dipole pairs and/or synthesize a non-directional signal from the directional dipole signals instead of having a physical omni-directional dipole. Some examples could have just a single pair of physically-separated antenna elements (i.e. configured to act as one directional antenna system or a pair of directional antenna systems).

The antenna unit 3 may comprise circuitry to down-mix each of the directional dipole signals by a different respective intermediate sub-carrier frequency and then combine the resulting signals in a common output RF signal that is sent to a signal-processing unit 4. The signal-processing unit 4 uses analogue and digital circuitry to process a received RF beacon signal to determine a bearing to the radio beacon 2 that is transmitting the signal. This bearing can then be indicated to an operator (e.g. a rescuer) on a display 5 or other output device, to enable the operator to navigate to the radio beacon 2.

Fig. 2 shows, on the left plot, an exemplary power spectrum when receiving a first-generation COSPAS SARSAT continuous-wave homing signal, as it might be output from the antenna unit 1 when the non-directional dipole $\Sigma$ and one of the directional antenna systems (e.g. $\Delta_1 = D_1 - D_5$) is active. This is described by way of comparison with the second-generation spread-spectrum signals described below.

The power spectrum in Fig. 2 has three easily discernible peaks. The central plot shows that the two directional dipoles (e.g. $D_1$ and $D_5$) create two peaks, while the right plot shows that the non-directional dipole $\Sigma$ contributes a single central peak. The frequency separation of the peaks is due to the different intermediate sub-carrier frequencies used by the antenna unit 1 for the different signal components. In this example, the peak from the non-directional antenna $\Sigma$ is at the carrier frequency of the beacon signal, while the delta signals are set at the carrier frequency plus and minus the intermediate sub-carrier frequency (FSC) that is injected by the direction-finding antenna. The visualization of two peaks at $F_{carrier}$ - $F_{FSC}$ and $F_{carrier}$ + $F_{FSC}$ arises due to the spectral representation of a double-side band modulation.

When the radio beacon 2 is aligned with the directional axis of a directional antenna pair (e.g. $\{D_7, D_3\}$ in Fig. 1), its transmissions will reach the nearer dipole, $D_7$, earlier than the further dipole, $D_3$, and so the difference signal $\Delta_7 = D_7\text{-}D_3$ will contain energy at the frequency of the continuous-wave homing signal. However, for a directional antenna pair that is close to right angles to the bearing to the radio beacon 2 (e.g. $\{D_1, D_5\}$ in Fig. 1), the radio signal will be received simultaneously at both dipoles and so the difference signals $\Delta_1 = D_1\text{-}D_5$ and $\Delta_5 = D_5\text{-}D_1$ will both be close to zero (i.e. below the noise floor).

The strongly peaked nature of the power spectrum of signal components from the non-directional channel and any directional antennas that are aligned with the radio beacon 2 facilitates straightforward determination of a bearing using a Watson-Watt approach, e.g. by measuring and comparing the peak amplitudes of the outputs from each of the eight different directional antenna systems.

In some examples, the apparatus 1 may optionally support a mode of operation in which it can determine a bearing to a radio beacon that is transmitting a first-generation COSPAS SARSAT signal, in addition to supporting bearing-finding for second-generation COSPAS SARSAT signals. However, other examples may support only second-generation or later COSPAS SARSAT signals.

When receiving COSPAS SARSAT first generation signals, or any other non-spread-spectrum signal inside [30; 400MHz], the FSC may be set at 8 KHz. When receiving COSPAS SARSAT second generation (CS2G) signals, as described in more detail below, the FSC frequency may be set at about 300 KHz. A spacing of 300 kHz enables good separation of both spread-spectrum lobes from the central carrier, since they have a larger bandwidth than conventional non-spreads-signal RF signals.

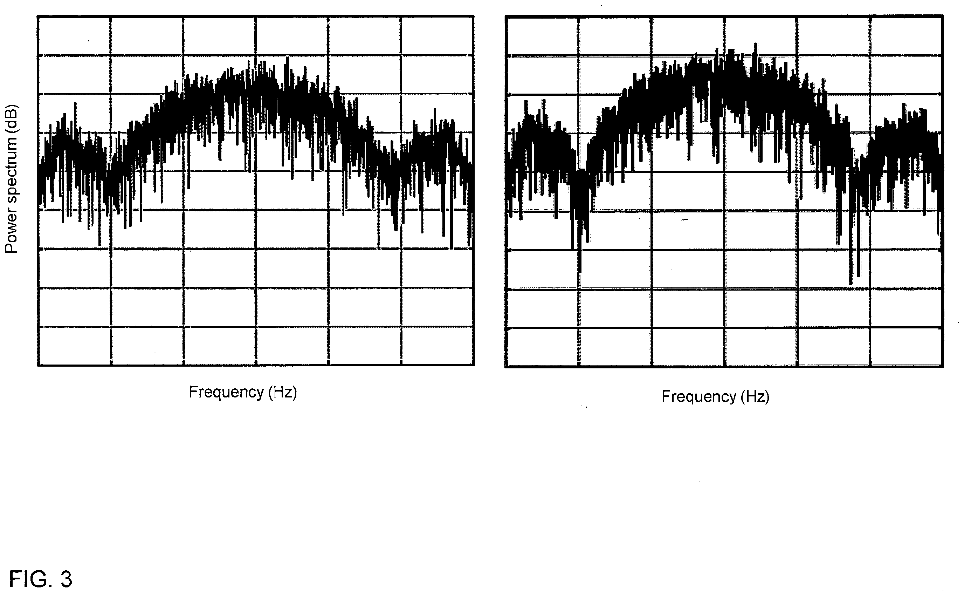

Fig. 3 shows an exemplary power spectra when receiving a second-generation COSPAS SARSAT spread-spectrum beacon signal with an apparatus 1 as shown in Fig. 1.

The left plot shows an example signal component that is output from the antenna unit 1 from one of the directional antenna systems (e.g. the difference signal $\Delta_5$ = $D_5\text{-}D_1$), while the right plot shows an example signal component output from the non-directional dipole $\Sigma$. The beacon signal comprises data encoded using direct sequence spread spectrum (DSSS) and modulated using OQPSK (offset quadrature phase-shift keying), and its power spectrum does not therefore have clear peaks as was the case with the first-generation continuous-wave signal shown in Fig. 2. In some examples the signal is less than 25 dB above the noise floor, and is too low for performing peak amplitude detection. The RF signal cannot therefore be directly processed using the same amplitude-based bearing finding method as a first-generation signal.

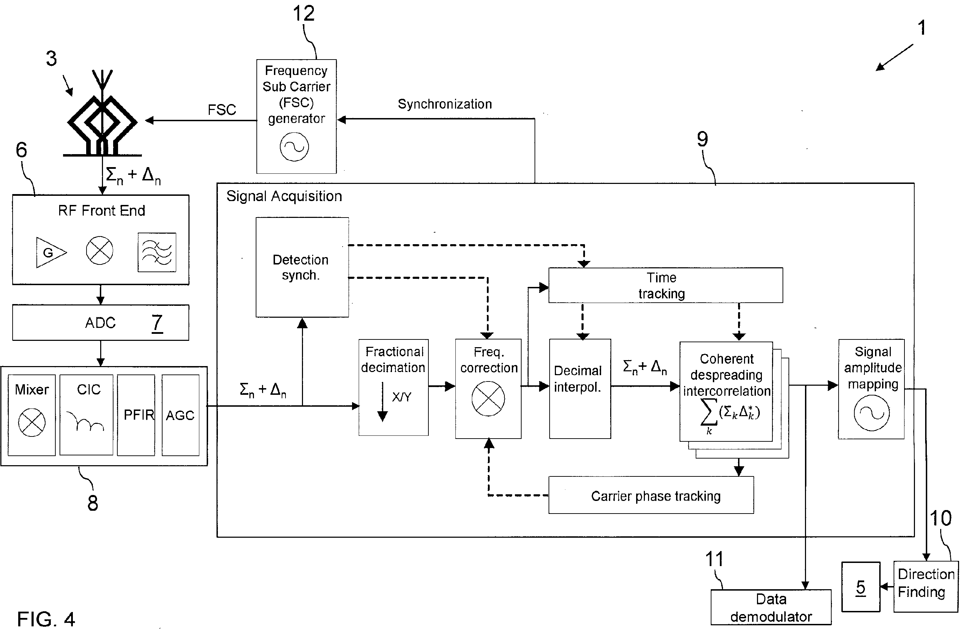

Instead, in some examples, the signal is processed using the modules shown in Fig. 4. in this example, the antenna unit 3 outputs a combined RF signal, $\Sigma_n + \Delta_n$, where n=1,...,8, representing one 360-degree rotation of the antenna unit 3. Each non-directional signal component $\Sigma_n$ is at the carrier frequency, while each directional dipole signal component is mixed to a different respective sub-carrier frequency. This RF signal is received by the signal-processing unit 4 which, in this example, comprises an RF front end 6, followed by an ADC 7, followed by a digital pre-processing module 8, followed by a digital signal acquisition module 9, which outputs to a direction-finding module 10, a data demodulator 11 and a frequency sub-carrier (FSC) generator 12. The direction-finding module 10 may in turn be connected to a display 5 as described above.

The RF front end 6 comprises analogue circuitry for amplifying, mixing and filtering the combined RF signal output by the antenna unit 3, before it is digitised by the ADC 7. The digital pre-processing module 8 performs further digital downmixing, cascaded integrator-comb (CIC) filtering, programmable finite impulse response (FIR) filtering, and automatic gain control (AGC). The resulting digital output is provided to the signal acquisition module 9 which processes the spread-spectrum signal so that it can be demodulated and used for direction finding.

The signal acquisition module 9 performs detection synchronisation which is used for time tracking and frequency correction within the acquisition module 9. The time tracking correction compensates for any time error between a clock of the transmitter beacon 2 and a clock of the receiver apparatus 1; estimating the clock drift can enable the apparatus 1 to select the best sample of a symbol. A synchronisation signal is also output to the FSC generator 12 for adjusting the frequency separating of the different antenna signal components within the antenna unit 3. The digitised signal $\Sigma_n + \Delta_n$ passes through a fractional decimation filter and is then frequency corrected. The frequency correction is based on the detection synchronisation and a carrier phase tracking. Decimal interpolation is performed after the frequency correction.

A coherent despreading intercorrelation operation is applied to the eight digital "directional" difference signals, $\Delta_1,..., \Delta_8$, obtained from the eight directional antenna systems, by intercorrelating each directional signal with the digital signal portion from the non-directional antenna system, thereby determining a respective correlation value for the directional antenna system. This intercorrelation for each directional antenna system is calculated as the dot product

$$\sum_k (\Sigma_k \Delta_k^*)$$

where the large sigma represents a summation, over complex samples k, of the non-directional signal $\Sigma$ multiplied by the complex conjugate of the difference signal $\Delta$. The detection synchronisation ensures that the samples are accurately aligned such that this coherent intercorrelation is possible.

The intercorrelation may, in some examples, be performed simultaneously for all of the directional antenna systems, but in other examples it is performed for each directional antenna system consecutively and so each intercorrelation corresponds to a different temporal portion of the received radio signal and thus a different portion of the digital non-directional signal $\Sigma$.

The intercorrelation acts to extract the spread-spectrum signal from the noise. Whichever directional antenna pair is active, its two difference signals will always correlate with the signal that is being received by the omni directional antenna (which is not just the 406MHz carrier, but the full modulated signal). However, if the signal is coming from the same axis as the active pair, then it will be easier to extract the signal from the noise. Consequently, the resulting amplitude computation will give a higher amplitude compared to an orthogonal pair of dipoles. Considering the example of Fig. 1, when the radio beacon 2 is aligned with the directional axis of a directional antenna pair (e.g. {$D_7$, $D_3$} in Fig. 1), its transmissions will reach the nearer dipole, $D_7$, earlier than the further dipole, $D_3$, and so the difference signal $\Delta_7$ = $D_7$-$D_3$ will still contain the encoded spread-spectrum signal, since the signal bandwidth is narrow compared to the 406 MHz carrier frequency. It will therefore correlate strongly with the coherently-aligned non-directional signal $\Sigma$. However, for a directional antenna pair that is close to right angles to the bearing to the radio beacon 2 (e.g. {$D_1$, $D_5$} in Fig. 1), the radio signal will be received simultaneously at both dipoles and so the difference signal $\Delta_5$ = $D_5$-$D_1$ will contain the spread-spectrum signal at a much lower level, and will correlate with the non-directional signal $\Sigma$ only very weakly or not at all. Angles in between these extremes will give intermediate correlation values.

The correlation value (amplitude) for each directional signal is passed to an optional signal amplitude mapping module before being passed to the direction-finding module 10. In some examples, the correlation values are also output to a data demodulator 11 for use in decoding data from the signal.

The amplitude computed after the intercorrelation is directly usable by a Watson-Watt algorithm, and may be processed as such in some examples. However, in the present example, an optional amplitude mapping module 10 is provided, which plots amplitude values for each antenna position to generate a sinusoidal curve where the maximum amplitude value corresponds to the direction of the beacon 2 signal.

Alternatively, in others examples, the direction-finding module 10 compares the amplitude-mapped correlation values from the different directional antenna systems to determine a bearing using the same Watson-Watt processing as would be applied to the peak amplitude values when receiving a first-generation COSPAS SARSAT homing signal, e.g. by fitting a sinusoidal curve to the values and identifying a zero-crossing.

In some examples, such an apparatus 1 can conveniently allow a legacy first-generation direction-finding module 10 to be used also with second-generation signals without modification to the direction-finding module 10.

To improve the bearing accuracy, the same signal processing may optionally be performed on multiple 360-degree electronic rotations of the antenna unit 3, with the results from each rotation being combined and/or averaged.

The signal acquisition module 9 may be implemented using software executing on a processor (e.g. a CPU or DSP), or using dedicated digital logic (e.g. an ASIC or FPGA), or a combination of both. In some examples, at least the coherent despreading intercorrelation is performed by software. Support for second-generation COSPAS SARSAT direction finding may, in some examples, be conveniently implemented by performing a firmware or software upgrade to existing apparatus that supports first-generation homing signals without needing to change the hardware.

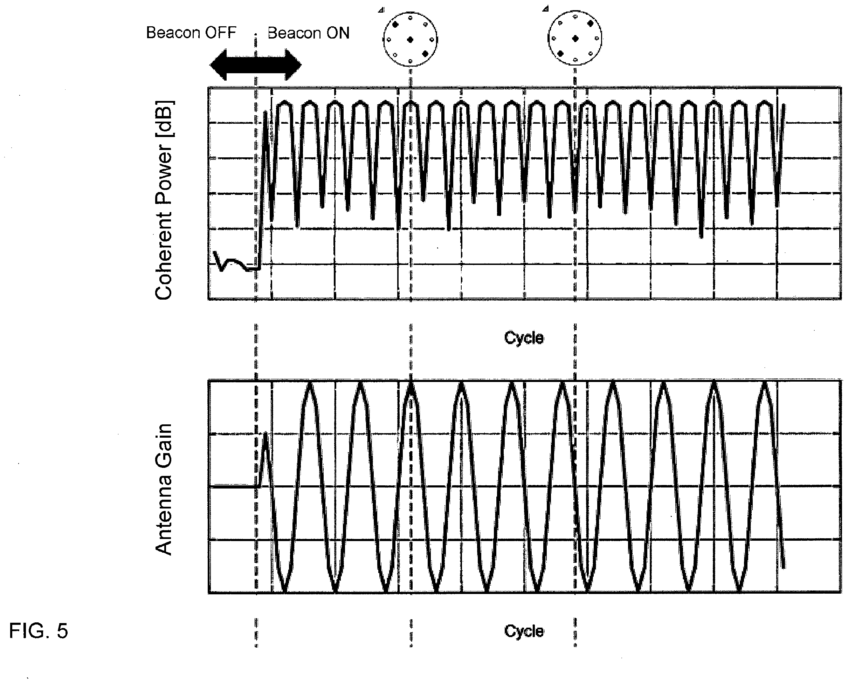

Fig. 5 shows a succession of cycles being performed by the apparatus 1, where each cycle is a complete 360° rotation, with the beacon initially turned off, and then turned on. Eight values per cycle are represented in Fig. 5. These values represent averaged values of the intercorrelation computation (with one value per dipole pair: D1-D5; D2-D6; D3-D7; D4-D8; D5-D1; 06-02; D7-D3; D8-D4). The upper graph is a representation of the intercorrelation output. Two example time instants are highlighted in the top row, for a first directional dipole that is aligned with the beacons, and then for a second directional dipole that is orthogonal; the dashed line to the upper graph indicates that the intercorrelation is high for the first pair but low for the second pair. The lower graph is the output of an amplitude computation taking care of the phase on each active pair of dipole (to allow resolving the 180° ambiguity). In this way, one sinusoidal curve period is obtained for each cycle (i.e. for each 360° rotation).

It will be appreciated by those skilled in the art that the present disclosure has been illustrated by describing one or more specific examples thereof, but is not limited to these examples; many variations and modifications are possible within the scope of the accompanying claims.

**Claims**

1. An apparatus for determining a bearing to a radio beacon, the apparatus comprising an arrangement of radio antennas comprising a non-directional antenna system and one or more directional antenna systems, wherein the non-directional antenna system has a receiving pattern that is omni-directional in a first plane, and wherein each directional antenna system has a respective receiving pattern that is directional in a respective direction in the first plane, wherein the apparatus is configured to:

receive, at the arrangement of radio antennas, a direct-sequence spread-spectrum radio signal, transmitted by a radio beacon;
generate, for each antenna system, a respective digital signal from an electrical signal output by the antenna system in response to the received radio signal;
for each of the one or more directional antenna systems, perform a coherent despreading operation by intercorrelating the digital signal from the directional antenna system with at least a portion of the digital signal from the non-directional antenna system to determine a correlation value for the directional antenna system; and
process the one or more determined correlation values to determine a bearing to the radio beacon relative to the arrangement of radio antennas.

2. The apparatus of claim 1, wherein each directional antenna system comprises two dipole elements spaced apart in the respective direction.

3. The apparatus of claim 1 or 2, comprising at least four directional antenna systems and wherein the respective directions of the directional antenna systems are uniformly angularly distributed in the first plane.

4. The apparatus of any preceding claim, wherein the non-directional antenna system comprises an antenna element that is distinct from all antenna elements of the one or more directional antenna systems.

5. The apparatus of any preceding claim, wherein processing the one or more determined correlation values to determine the bearing to the radio beacon comprises fitting a sinusoidal curve to the determined correlation values.

6. The apparatus of any preceding claim, further configured to:

perform carrier phase tracking for each digital signal; and
use the tracked carrier phase to perform a frequency correction for each digital signal ahead of the coherent despreading.

7. The apparatus of any preceding claim, configured to generate one or more signal amplitude values from the one or more correlation values, and to apply Watson-Watt processing to the one or more generated signal amplitude values to determine a bearing to the radio beacon.

8. The apparatus of any preceding claim, further configured to provide a visual or audible indication to a user of the apparatus of the bearing to the radio beacon.

9. The apparatus of any preceding claim, configured for mounting in a land, air, or maritime vehicle for use in a search and rescue operation.

10. A method of determining a bearing to a radio beacon, the method comprising:

receiving, at each antenna system of an arrangement of radio antennas, a direct-sequence spread-spectrum radio signal, transmitted by a radio beacon, wherein the arrangement of radio antennas comprises a non-directional antenna system and one or more directional antenna systems, the non-directional antenna system having a receiving pattern that is omni-directional in a first plane, and each directional antenna system having a respective receiving pattern that is directional in a respective direction in the first plane;
generating, for each antenna system, a respective digital signal from an electrical signal output by the antenna system in response to the radio signal;
for each of the one or more directional antenna systems, performing a coherent despreading operation by coherently intercorrelating the digital signal from the directional antenna system with at least a portion of the digital signal from the non-directional antenna system to determine a correlation value for the directional antenna system; and
processing the one or more determined correlation values to determine a bearing to the radio beacon relative to the arrangement of radio antennas.

11. The method of claim 10, wherein the direct-sequence spread-spectrum radio signal is a COSPAS SARSAT beacon signal.

12. Computer software for use in determining a bearing to a radio beacon, the computer software comprising instructions which, when executed on a processing system comprising one or more processors, cause the processing system to:

receive at least one respective digital signal representative of at least a portion of a direct-sequence spread-spectrum radio signal, transmitted by a radio beacon and received at each antenna system of an arrangement of radio antennas, wherein the arrangement of radio antennas comprises a non-directional antenna system and one or more directional antenna systems, the non-directional antenna system having a receiving pattern that is omni-directional in a first plane, and each directional antenna system having a respective receiving pattern that is directional in a respective direction in the first plane;

for each of the one or more directional antenna systems, perform a coherent despreading operation by coherently intercorrelating the digital signal from the directional antenna system with at least a portion of the digital signal from the non-directional antenna system to determine a correlation value for the directional antenna system; and

output the one or more determined correlation values for further processing to determine a bearing to the radio beacon relative to the arrangement of radio antennas.

13. The computer software of claim 12, further comprising instructions for:

performing carrier phase tracking for each digital signal; and

using the tracked carrier phase to perform a frequency correction for each digital signal upstream of the coherent despreading.

14. The computer software of claim 12 or 13, further comprising instructions for processing the determined correlation values to determine a bearing to the radio beacon relative to the arrangement of radio antennas.

15. The computer software of any of claims 12 to 14, wherein processing the one or more determined correlation values to determine the bearing to the radio beacon comprises fitting a sinusoidal curve to the determined correlation values.

FIG. 1

FIG. 2

Power spectrum (dB)

Frequency (Hz)   Frequency (Hz)   Frequency (Hz)

FIG. 3

FIG. 4

FIG. 5

EP 4 641 244 A1

## EUROPEAN SEARCH REPORT

Application Number

EP 24 31 5203

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 084 709 A (BAGHDADY ELIE J [US]) 28 January 1992 (1992-01-28) * claim 7; figures 1a, 3a * * column 1, lines 6-19 * * column 4, lines 6-35 * * column 8, lines 48-54 * * column 9, lines 30-64 * ----- | 1-15 | INV. G01S3/04 G01S3/24 G01S3/34 |
| A | US 2018/024220 A1 (MASSARELLA ALISTAIR [GB] ET AL) 25 January 2018 (2018-01-25) * figures 1a-2, 6a-8b * * paragraphs [0067], [0068], [0071] * ----- | 5,7,15 | |
| A | US 2 513 485 A (HERRICK ROSWELL H) 4 July 1950 (1950-07-04) * figures 12, 13 * * column 20, line 15 - column 21, line 13 * ----- | 5,7,15 | |
| A | US 2020/393530 A1 (CRAIG MURRAY [US] ET AL) 17 December 2020 (2020-12-17) * figure 4 * * paragraphs [0003], [0060] * ----- | 8,9 | TECHNICAL FIELDS SEARCHED (IPC) G01S |

The present search report has been drawn up for all claims

| Place of search | Date of completion of the search | Examiner |
|---|---|---|
| Munich | 1 October 2024 | Krummenacker, Benoît |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 31 5203

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2024

| Patent document cited in search report | | Publication date | Patent family member(s) | | Publication date |
|---|---|---|---|---|---|
| US 5084709 | A | 28-01-1992 | US | 5084709 A | 28-01-1992 |
| | | | US | 5745078 A | 28-04-1998 |
| | | | US | 6573865 B1 | 03-06-2003 |
| US 2018024220 | A1 | 25-01-2018 | EP | 3254133 A1 | 13-12-2017 |
| | | | GB | 2534894 A | 10-08-2016 |
| | | | US | 2018024220 A1 | 25-01-2018 |
| | | | WO | 2016124898 A1 | 11-08-2016 |
| US 2513485 | A | 04-07-1950 | NONE | | |
| US 2020393530 | A1 | 17-12-2020 | NONE | | |

EPO FORM P0459

For more details about this annex : see Official Journal of the European Patent Office, No. 12/82